# FASCICULE DE BREVET EUROPEEN

(11) **EP 4 340 667 B1**
(45) Date de publication et mention de la délivrance du brevet: **02.07.2025**
(21) Numéro de dépôt: 22722151.2
(22) Date de dépôt: 08.04.2022
(51) Int. Cl.: A41H 5/00, A47F 8/00, B32B 25/10, B32B 25/20, B32B 5/02, A63H 9/00

(54) **HOUSSE POUR MANNEQUIN ROBOTISÉ**
ABDECKUNG FÜR EINE ROBOTISCHE DUMMY
COVER FOR ROBOTIC DUMMY

(30) Priorité: 23.04.2021 FR 2104230
(43) Date de publication de la demande: 27.03.2024
(73) Titulaire: Euveka, 26320 Saint Marcel Lès Valence (FR)
(72) Inventeur: BERGENTHAL, Audrey Laure, 26320 Saint Marcel Lès Valence (FR)
(74) Mandataire: Hautier IP
(86) Numéro de dépôt international: PCT/EP2022/059418
(87) Numéro de publication internationale: WO 2022/223318

(56) Documents cités:
- EP-A1- 2 090 619
- JP-A- 2006 141 564
- US-A1- 2016 339 349

## Description

### DOMAINE TECHNIQUE DE L'INVENTION

L'invention concerne le domaine des mannequins robotisés qui trouvent pour application particulièrement avantageuse le domaine de la couture et de la confection de pièces de vêtements.

### ÉTAT DE LA TECHNIQUE

Depuis plusieurs années maintenant, des mannequins robotisés voient le jour. Ces mannequins sont destinés à l'industrie du textile et sont configurés de sorte à présenter en partie au moins une morphologie adaptable.

On notera par exemple des mannequins dont certaines parties sont plus ou moins gonflables afin de grossir plus ou moins le mannequin et ainsi disposer sur un même mannequin de plusieurs morphologies.

Ces mannequins robotisés permettent ainsi de reproduire en partie au moins certaines mensurations d'un individu avec plus ou moins de précision. Cela est rendu possible par des parties mobiles.

Néanmoins l'un des principaux inconvénients de ces technologies réside dans la discontinuité des déformations des mannequins, en effet, ces discontinuités de forme du mannequin entraînent des problématiques importantes lors de la confection de vêtements.

Un objet de la présente invention est donc de proposer une solution à ces problématiques.

Les autres objets, caractéristiques et avantages de la présente invention apparaîtront à l'examen de la description suivante et des dessins d'accompagnement. Il est entendu que d'autres avantages peuvent être incorporés. Le US 2016/339349 A1 divulgue une peau artificielle pour mannequin robotisé étant caractérisée en ce qu'elle comprend un empilement de couches, ledit empilement de couches comprenant une couche externe à base d'un élastomère et une couche interne comprenant un textile

### RÉSUMÉ DE L'INVENTION

Un premier aspect concerne une housse de revêtement, pour mannequin robotisé apte à reproduire à la demande au moins une partie de la morphologie d'un individu par pilotage d'une pluralité de coques mobiles par rapport à une armature du mannequin robotisé, la housse étant caractérisée en ce qu'elle comprend un empilement de couches, ledit empilement de couches comprenant :
- une couche interne à base d'un élastomère ;
- une couche externe comprenant au moins un textile, disposée autour de la couche interne, et appliquant au moins une contrainte mécanique sur une partie au moins de la couche interne ;
- et dans laquelle la housse comprend au moins un élément de réduction de la transmission des contraintes mécaniques entre la couche interne et la couche externe.

Le déplacement des coques entraîne généralement, dans le cas d'un mannequin robotisé de l'art antérieur, des irrégularités topographiques au niveau des bords des coques ; en effet lorsqu'une coque se déplace vers l'avant, cela crée un décroché entre la surface de ladite coque et la surface environnant la coque.

La présente invention solutionne cette problématique en disposant une housse par-dessus l'armature, et donc les coques, du mannequin robotisé.

Cette housse, de par sa conception, permet d'épouser les mouvements des coques tout en harmonisant la topographie de surface du mannequin robotisé.

L'utilisation d'un empilement astucieux de couches permet cela.

De plus, le recours à au moins deux couches de natures physico-chimiques différentes nécessite l'utilisation d'une astuce afin de réduire le coefficient de frottement entre lesdites deux couches. La présente invention permet ainsi une déformation de la housse en fonction de l'armature du mannequin robotisé tout en conservant une topographie de surface courbe et non abrupte.

En limitant les contraintes mécaniques sur la couche interne, c'est-à-dire en limitant les frottements, les mouvements des coques sont moins contrariés par les résistances interfaciales entre les deux couches, interne et externe, grâce à des frottements réduits. En effet, lorsque les coques se déplacent, elles déforment la couche interne qui est déjà contrainte par la couche externe ; il s'ensuit que la surface externe de la couche interne (et la surface interne de la couche externe) sont le lieu de frottements. Ces derniers sont d'autant plus importants que la couche interne, à base d'élastomère, est de nature fort adhérente et que la couche externe est fortement tendue autour d'elle pour que la surface extérieure du mannequin soit régulière et lisse.

La présente invention permet ainsi à un mannequin robotisé de présenter une topologie de surface proche, voire même identique, à la topologie de surface d'un être humain. En effet, la présente invention permet de réduire, voire même d'éviter, la présence d'irrégularités topographiques à la surface par exemple du tronc.

Un autre aspect concerne un procédé d'installation d'une housse sur un mannequin robotisé apte à reproduire à la demande la morphologie d'un individu par pilotage d'une pluralité de coques mobiles par rapport à au moins une armature, ledit procédé comprenant les étapes suivantes :
- disposition de la couche interne comprenant un élastomère au-dessus de l'armature du mannequin robotisé ;
- disposition de la couche externe comprenant au moins un textile au-dessus de la couche interne et de sorte à appliquer au moins une contrainte mécanique en compression sur une partie au moins de la couche interne.

Un autre aspect concerne un mannequin robotisé apte à reproduire à la demande au moins une partie de la morphologie d'un individu par pilotage d'une pluralité de coques mobiles par rapport à une armature du mannequin robotisé, et comprenant une housse de revêtement appliquée sur la pluralité de coques, la couche externe appliquant au moins une contrainte mécanique sur la couche interne lorsque la couche interne est disposée entre ladite armature et la couche externe.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un mannequin robotisé revêtu d'une housse selon un mode de réalisation de la présente invention.
La figure 2 représente une vue schématique d'un mannequin robotisé.
La figure 3 représente une vue en coupe transverse d'un mannequin revêtu d'une housse selon un mode de réalisation de la présente invention.
La figure 4 représente un empilement de couches formant une housse selon un mode de réalisation de la présente invention.
La figure 5 représente un empilement de couches formant une housse selon un autre mode de réalisation de la présente invention.
La figure 6 représente un empilement de couches formant une housse selon un autre mode de réalisation de la présente invention.
La figure 7 représente un empilement de couches formant une housse selon un autre mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- l'élément 140 de réduction de la transmission des contraintes mécaniques est en partie au moins formé par une portion comprenant un agent lubrifiant 141, ladite portion étant comprise dans ladite couche interne 120 et/ou ladite couche externe 130 ;
   Ainsi la présence de cet agent lubrifiant 141 dans la couche externe 130 entraîne que la surface interne 132 de la couche externe 130 présente un coefficient de frottement avec la surface externe 123 de la couche interne 120 faible par rapport au cas où il n'y aurait pas d'agent lubrifiant 141 dans la couche externe 130.
   Cela permet de réduire le coefficient de frottement entre la couche interne et la couche externe ;
- ledit agent lubrifiant 141 est disposé en volume de la couche interne 120 et/ou de la couche externe 130 ;
   On entend par disposer en volume que cet agent est un composant de la couche concernée. L'agent lubrifiant réduit l'effet collant de la couche, surtout quand c'est la couche en élastomère, tout en gardant son élasticité.
- La couche interne est à base de silicone ;
   Cela permet de disposer d'une couche interne permettant une conformation en accord avec les mouvements des coques tout en adaptant la topographie de l'armature afin d'en réduire les irrégularités.
- L'agent lubrifiant 141 est un additif au silicone ;
- le ratio entre l'épaisseur 121 de la couche interne 120 et l'épaisseur 131 de la couche externe 130 est compris entre 0.9 et 1.1, les épaisseurs 121, 131 étant prises selon une direction orthogonale à la surface interne 122, 132 de la couche 120, 130 considérée au point de mesure considéré ;
   Cela permet de disposer d'un comportement déformation similaire pour les deux couches, avec une bonne protection contre le perçage par les aiguilles, un moelleux ou une certaine souplesse au touché, sans risque de troubles musculosquelettiques.
- L'épaisseur 121 de la couche interne 120 est comprise entre 3 et 7 mm, et est de préférence égale à 5mm ;
   Cela permet d'épouser la forme souhaitée par le déplacement des coques tout en réduisant les irrégularités topographiques existantes entre les différentes parties mobiles ou non de l'armature.
- Le ratio entre la dimension transversale intérieure de la couche externe 130 au repos et la dimension transversale extérieure de la couche interne 120 est strictement inférieur à 1 ;
- l'élément 140 de réduction de la transmission des contraintes mécaniques comprend au moins une couche intermédiaire 142 dont la surface interne présente un coefficient de frottement inférieur à celui de la surface externe 123 de la couche interne 120, et de préférence qui comprend au moins un élément lubrifiant pris parmi au moins : du téflon, un vernis, un apprêt ;
- la couche interne 120 et la couche externe 130 sont physiquement dissociées ;
   Cela permet à la couche externe de glisser librement, et de disposer de plusieurs degrés de liberté dans le choix des matériaux aussi bien pour la couche interne que pour la couche externe.
   Cela permet également de combiner plusieurs matériaux et ainsi bénéficier de leurs propriétés physico-chimiques cumulées. Cela permet d'avoir une couche interne en élastomère et une couche externe en textile.
- Le textile comprend : un textile souple 3D avec un additif sous forme d'un traitement via l'ajout d'un apprêt ;
   Cela permet de piquer des aiguilles dans le textile lors de la confection de pièces de vêtements.
   Cela permet de disposer d'un large choix de textures pour la face externe de la couche externe. Ce textile peut être configuré pour disposer de propriétés anti frictions vis-à-vis des vêtements ou encore anti électrostatisme, ou encore il évite l'usure prématurée de cette couche.
- un capteur de pression est configuré pour mesurer la pression exercée par la couche externe 130 sur la couche interne 120.
- Selon une possibilité, le mannequin robotisé 10 est apte à reproduire à la demande au moins une partie de la morphologie d'un individu par pilotage d'une pluralité de coques 11 mobiles par rapport à une armature du mannequin robotisé 10, et il comprend une housse 100 de revêtement appliquée sur la pluralité de coques, la couche externe 130 appliquant au moins une contrainte mécanique sur la couche interne 120 lorsque la couche interne 120 est disposée entre ladite armature 11 et la couche externe 130.
   De cette façon, la couche externe 130 est conformée pour subir une contrainte mécanique en tension lorsqu'elle est disposée sur ledit mannequin robotisé 10. L'allongement du périmètre de la couche externe peut aller jusqu'à 50%.
- Des actionneurs sont configurés pour déplacer les coques de la pluralité de coques, la force de poussée des actionneurs étant d'au moins 150 N, et de préférence de 200 N. Cela permet d'assurer la déformation de la peau et la housse. Une poussée trop faible entraine un calage des actionneurs, une poussée trop forme peut endommager les vêtements.
   Cela permet à la housse d'être disposée au plus près de l'armature de sorte à reproduire avec précision la morphologie demandée en fonction du mouvement des coques. Cela permet également de ne pas avoir de plis à la surface du mannequin robotisé

La présente invention concerne une housse pouvant être d'un seul tenant ou comprenant une pluralité de revêtements. En effet, la housse selon la présente invention comprend un empilement de couches. Selon un mode de réalisation, les couches de l'empilement de couches peuvent présenter des zones de solidarisation des unes avec les autres. Par exemple, il peut s'agir d'une couture sur un bord supérieur de la housse permettant de solidariser l'ensemble des couches de l'empilement de couches tout en conservant une liberté de mouvement au niveau des faces d'au moins deux couches de l'empilement de couches.

Selon un mode de réalisation préféré, au moins une partie des couches de l'empilement de couches sont physiquement indépendantes les unes des autres.

Ainsi, selon un mode de réalisation tel que décrit par la suite, l'empilement de couches comprend au moins une couche externe et une couche interne ainsi qu'une interface entre lesdites couches externe et interne.

Avantageusement, au moins une des couches de l'empilement, et de préférence toutes les couches, ont la forme d'une enveloppe continue de bas en haut, et seulement dotée de deux ouvertures, respectivement une ouverture inférieure et une ouverture supérieure. Le positionnement sur l'armature du mannequin s'effectue en enfilant la couche en question.

Ainsi selon ce mode de réalisation, la housse comprend une couche interne, dite également première couche, comprenant de préférence un élastomère, configuré pour revêtir l'armature du mannequin robotisé. La couche peut être à base d'élastomère. On entend par « à base » d'un matériau M, une couche comprenant ce matériau M uniquement ou majoritairement ce matériau M et éventuellement d'autres matériaux.

Puis une fois cette couche interne en place, la couche externe peut être disposée par-dessus, mais pas nécessairement au contact de, la couche interne. Cette couche externe comprend avantageusement un textile configuré pour venir revêtir la couche interne et donc le mannequin robotisé. Le positionnement de la couche externe et de la couche interne sur l'armature du mannequin robotisé fait naître une interface couche externe/couche interne.

Selon un mode de réalisation, une couche intermédiaire peut être disposée entre la couche interne et la couche externe, avant et/ou après le positionnement de la couche externe. Cette couche intermédiaire forme en partie au moins l'interface couche externe/couche interne.

Avantageusement et tel que décrit par la suite, cette couche intermédiaire peut être configurée pour réduire les contraintes mécaniques appliquées par la couche externe à la couche interne et/ou inversement. On notera que ces contraintes mécaniques présentent un vecteur dont l'une des composantes principales se trouve dans le plan des surfaces des couches interne et externe. En effet, lorsque l'armature du mannequin robotisé se déforme, cela entraîne la déformation de la housse, et ainsi de l'empilement de couches. Afin de réduire les contraintes mécaniques entre les couches externe et interne, l'interface est avantageusement une interface de réduction de la transmission des contraintes mécaniques. Par exemple cette interface peut comprendre une couche intermédiaire comprenant un élément lubrifiant, et/ou comprendre un agent lubrifiant. Ainsi l'interface de réduction de la transmission de contraintes mécaniques peut comprendre un vernis, ou bien une couche en téflon, ou encore tout type d'élément ou d'agent lubrifiant permettant de réduire le coefficient de frottement entre la couche interne et la couche externe. Selon un mode de réalisation, ces éléments ou agents lubrifiants peuvent être intégrés au moins en partie dans la couche interne et/ou la couche externe.

En effet, il peut s'agir d'une couche déposée sur la surface externe de la couche interne en regard de la surface interne de la couche externe, et/ou sur la surface interne de la couche externe.

Il peut également s'agir d'un agent lubrifiant disposé directement dans la couche interne et/ou la couche externe permettant la formation d'une interface de réduction de la transmission de contraintes mécaniques avec l'autre couche.

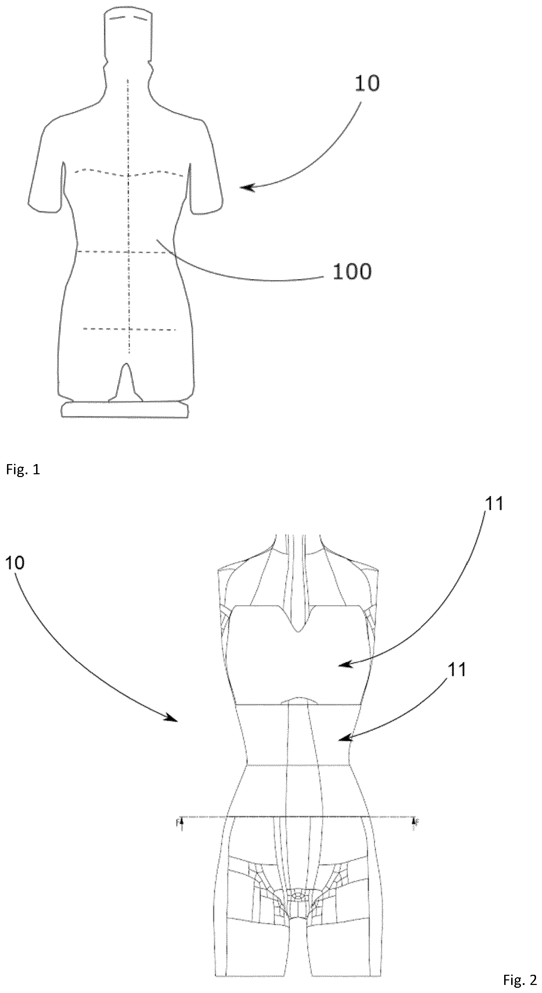

Nous allons à présent décrire la présente invention au travers des figures 1 à 7.

La figure 1 représente, selon un mode de réalisation, un mannequin robotisé 10 comprenant une housse 100 selon la présente invention. Selon cette figure, la housse 100 est conformée pour recouvrir l'armature 11 du mannequin robotisé 10 de sorte à définir les surfaces du tronc, et de préférence des bras et de préférence du haut des cuisses.

On entend par mannequin robotisé un dispositif de reproduction de la morphologie d'un être humain, sur au moins une partie anatomique. En particulier, il peut s'agir d'une portion de tronc, depuis les hanches, jusqu'au cou. Ce cas n'est pas limitatif, le mannequin pouvant alternativement ou en complément correspondre à d'autres parties du corps, en particulier au moins un membre inférieur et/ou au moins un membre supérieur. L'adjectif « robotisé » s'entend de la présence, dans le mannequin, de parties mobiles pilotables par des moyens de commande, typiquement des moyens informatiques générant des commandes numériques ensuite transmises et transformées en signaux de commande d'éléments électromécaniques.

La figure 2 représente une vue schématique d'une portion de l'armature 11 d'un mannequin robotisé 10. Cette armature 11 comprend une pluralité de coques 12 mobiles relativement à ladite armature 11 de sorte à pouvoir adapter la morphologie, en partie au moins, du mannequin robotisé 10 en fonction des besoins de l'utilisateur.

En l'absence d'une housse 100 selon la présente invention, le déplacement de ces coques 12 pourrait entraîner des reliefs en bordure de coque 12 incompatibles avec une morphologie humaine. Ces reliefs comprendraient en particulier des décrochés ou bien encore des creux abrupts. Ces reliefs formeraient des irrégularités topographiques et nuiraient à l'harmonie de la surface du mannequin robotisé 10. L'utilisation d'une housse 100 selon la présente invention réduit, voire évite totalement, la présence de ce type d'inconvénients. En effet, l'utilisation d'une housse 100 selon la présente invention permet d'uniformiser la surface du mannequin robotisé 10.

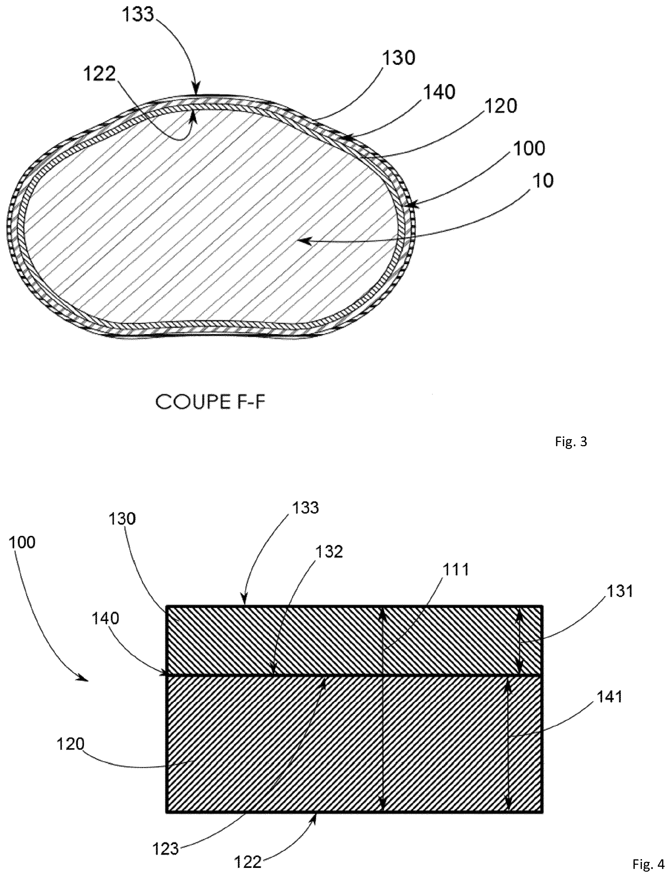

La figure 3 représente une vue en coupe au niveau de la ceinture d'un mannequin robotisé 10 comprenant une housse 100 selon un mode de réalisation de la présente invention.

Selon le mode de réalisation illustré en figure 3, l'empilement de couches 110 comprend la couche interne 120, une couche intermédiaire 142 de réduction de la transmission des contraintes mécaniques et la couche externe 130.

Avantageusement, la couche intermédiaire 142 de réduction de la transmission des contraintes mécaniques est configurée pour réduire le coefficient de frottement qui existerait entre la couche interne 120 et la couche externe 130 en absence de ladite couche intermédiaire 142 ou d'un agent lubrifiant 141.

On notera que de manière avantageuse, l'empilement de couches 110 lisses les formes produites par les coques 12 de l'armature 11 du mannequin robotisé 10. En particulier, la housse 100 permet au travers du choix des matériaux et de leurs épaisseurs respectives de réduire, voire d'éviter, la formation d'aspérités abruptes au niveau de la surface du mannequin robotisé 10. Ces aspérités abruptes font partie d'une pluralité d'irrégularités topographiques observables sur des mannequins robotisés en l'absence d'une housse selon la présente invention.

Selon un mode de réalisation, la couche externe 130 comprend un textile. Il peut s'agir d'un tricot réalisé au moins en partie à partir de fibres de matériau polymère, notamment élastomères (par exemple au moins 15 % en masse de fibres d'élastomère). À titre de matériau, on peut citer : le polyamide, le polyester, des fibres métalliques, des élastomères comme l'élasthanne. Par exemple, la couche externe peut être formée par un tricot comprenant une combinaison de fibres: en élastomère (par exemple de l'élasthanne à 17 % en masse), en polyamide (par exemple 51 % en masse), en polyester (par exemple 32 % en masse).

De préférence, l'élongation jusqu'à la limite élastique de la couche externe 130 est supérieure à 100 %, voire à plus de 200 %.

De manière astucieuse, le fait que la couche externe 130 comprenne un textile permet à l'utilisateur de piquer la housse 100 avec une aiguille par exemple, pour y disposer des pièces de vêtement par exemple.

Avantageusement, l'épaisseur 131 de la couche externe 130 est comprise entre 2 et 8 mm, de préférence entre 3 et 7mm et avantageusement égale à 5 mm.

Selon un mode de réalisation, les dimensions spatiales de la couche externe 130 sont supérieures lorsque la couche externe 130 n'est pas disposée sur la couche interne 120, c'est-à-dire lorsqu'elle est au repos, à celles lorsque la couche externe est disposée sur la couche interne 120. La couche externe se trouve ainsi tendue.

Selon un mode de réalisation, la couche interne 120 comprend un élastomère, de préférence du silicone. Éventuellement, il pourrait s'agir d'un matériau polymère présentant un taux d'allongement à la limite élastique d'au moins 500%, voire 800 %. De préférence, le matériau présente une bonne résistance à la fatigue, avec une mémoire de forme limitée, par exemple résistant à au moins 45 000 cycles ; de préférence, le matériau élastomère présent une dureté réduite, de sorte à accommoder de manière souple les variations de position des coques, par exemple pour éviter des phénomènes de discontinuité de surface au niveau des zones entre les coques.

La dureté du matériau élastomère est de préférence inférieure ou égale à 50 Shore 00 ; il peut être par exemple d'une dureté Shore 00 de 40.

De préférence, en ayant recours à un agent lubrifiant dans le matériau silicone, le coefficient de frottement entre la couche 120 et la couche 130 est inférieur à celui qui existerait entre une couche 120 en silicone uniquement, et la couche 130. L'agent peut être ajouté dans la composition non encore durcie ; il peut s'agir d'un additif du type vendu sous la marque « soft touch » par la société COP à Saint Nazaire en Royans et être par exemple présent à hauteur de 1 % en masse du mélange. Par ailleurs, l'additif peut comprendre du polyuréthane et/ou du polyester, par exemple sous forme de dispersion dans la résine silicone, et/ou des polyisocyanates émulsifiables dans l'eau.

De préférence, l'épaisseur 121 de la couche interne 120 est comprise entre 2 et 8 mm, de préférence entre 3 et 7mm et avantageusement égale à 5 mm. Il n'est pas absolument nécessaire que toute l'épaisseur 121 soit réalisée avec un élastomère, notamment du silicone, comprenant un additif favorisant le glissement ; une portion superficielle de cette épaisseur peut suffire à cet effet.

Suivant une possibilité additionnelle ou alternative, on réalise un vernis en surface de la couche externe, a vocation de réduire le coefficient de friction.

De manière astucieuse, l'épaisseur 121 de la couche interne 120 permet de disposer sur la couche interne 120, dans la couche interne 120 et/ou sous la couche interne 120, un ou plusieurs capteurs de diverses natures de manière à collecter des données, ces capteurs seront décrits par la suite.

Le choix astucieux de cette épaisseur 121 permet d'une part d'accoutumer les variations de hauteur entre diverses coques mobiles de sorte à conserver une topographie harmonieuse et d'autre part d'avoir la liberté de disposer divers autres organes à l'intérieur même de la couche interne 120, comme par exemple des capteurs.

Selon un mode de réalisation préféré, l'épaisseur 121 de la couche interne 120 et l'épaisseur 131 de la couche externe 130 sont identiques, éventuellement à 10% près. Cela permet de disposer de comportements similaires lors des déformations.

Selon un mode de réalisation, la couche externe 130 applique une contrainte mécanique en compression sur la couche interne 120 lorsque la couche externe 130 et la couche interne 120 revêtent l'armature 11 du mannequin robotisé 10.

De manière particulièrement avantageuse, la couche externe 130 est disposée au-dessus de la couche interne 120 de sorte à appliquer une contrainte mécanique en compression sur la couche interne 120. Pour cela, plusieurs méthodes sont possibles.

A titre d'exemple non limitatif, la couche externe 130 peut comprendre un textile ou un élément élastique de sorte à ce que les dimensions d'extension de la couche externe 130 soient plus petites que les dimensions d'extension de l'armature 11 du mannequin robotisé 10 revêtu de la couche interne 120. Ainsi, lorsque la couche externe 130 est disposée de sorte à recouvrir la couche interne 120, la couche externe 130 subit une contrainte mécanique en tension et la couche interne 120 subit une contrainte mécanique en compression.

A titre d'exemple non limitatif, la couche externe 130 peut comprendre un mécanisme de serrage de sorte à réduire les dimensions d'extension de la couche externe 130, une fois celle-ci disposée au-dessus de la couche interne 120.

De préférence, la couche externe 130 présente une capacité d'allongement dans sa limite élastique d'au moins 50 %.

Tel qu'indiqué précédemment, une première option est que l'élément de réduction de la transmission des contraintes mécaniques entre la couche interne 120 et la couches externes 130 soit réalisé par l'intermédiaire d'un agent dans le matériau d'une de ces couches, et particulièrement de la couche interne 120.

En complément ou en alternative, l'élément de réduction de la transmission des contraintes mécaniques peut être réalisé par une interface physique intercalée entre la couche 120 et la couche 130. Dans ce cas, on a recours à une couche intermédiaire 142 dont les propriétés et de permettre de disposer d'un frottement moindre entre la couche intermédiaire 142 et chacune des couches 120 et 130, relativement à la situation qui existerait sans la couche intermédiaire, avec un frottement direct entre la couche 120 et la couche 130. De préférence, l'épaisseur de la couche intermédiaire 142 est inférieure à l'épaisseur de la couche 120 et de la couche 130.

La figure 4 représente un empilement de couches 110 selon un mode de réalisation de la présente invention. Sur cette figure, l'interface 140 de réduction de la transmission des contraintes mécaniques peut avoir subi un traitement quelconque visant à réduire le coefficient de frottement entre la surface externe 123 de la couche interne 120 et la surface interne 132 de la couche externe 130. Cette réduction du coefficient de frottement permet à la couche interne 120 de se déplacer localement en fonction des coques 12 mobiles de l'armature 11 et de déformer la couche externe 130 en fonction desdits déplacements de coques 12.

Sur cette figure, et selon un mode de réalisation, l'épaisseur 131 de la couche externe 130 est inférieure à l'épaisseur 121 de la couche interne 120.

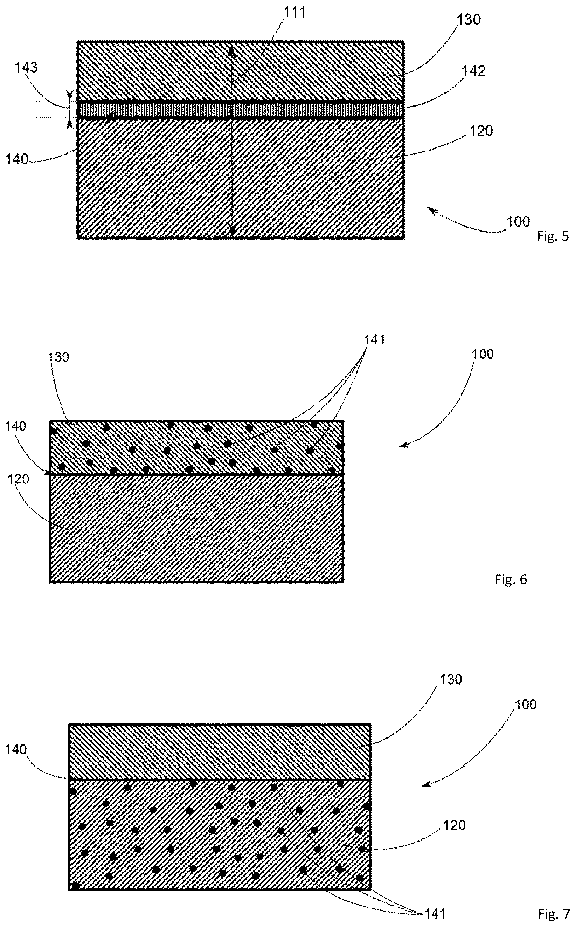

Selon un mode de réalisation, l'épaisseur 111 de l'empilement de couches 110 est comprise entre 8 et 12mm, de préférence entre 9 et 11mm et avantageusement de 10mm
La figure 5 représente un mode de réalisation dans lequel l'interface 140 de réduction de la transmission des contraintes mécaniques comprend une couche intermédiaire 142 disposée entre la couche interne 120 et la couche externe 130.

Cette couche intermédiaire 142 est configurée pour réduire le coefficient de frottement, encore appelé frottement, entre la surface externe 123 de la couche interne 120 et la surface interne 132 de la couche externe 130.

La figure 6 représente un mode de réalisation selon la présente invention dans lequel la couche externe 130 comprend un agent lubrifiant 141. Ainsi la présence de cet agent lubrifiant 141 dans la couche externe 130 entraîne que la surface interne 132 de la couche externe 130 présente un coefficient de frottement avec la surface externe 123 de la couche interne 120 faible par rapport au cas où il n'y aurait pas d'agent lubrifiant 141 dans la couche externe 130.

Ainsi, la présence d'un agent lubrifiant 141 dans la couche externe 130 entraîne une modification de l'état de surface des surfaces 132, 133 de la couche externe 130 de sorte à ce que le coefficient de frottement avec la surface externe 123 de la couche interne 120 soit réduit relativement au cas exempt d'agent lubrifiant 141. Suivant une autre possibilité, la surface interne de la couche externe présente un revêtement augmentant le glissement, par exemple avec une couche d'apprêt.

La figure 7 représente le cas inverse, c'est-à-dire un mode de réalisation dans lequel c'est la couche interne 120 qui comprend un agent lubrifiant 141.

L'agent lubrifiant peut être sous forme d'un additif incorporé au matériau silicone, comme indiqué précédemment.

Un mode de réalisation non illustré consiste également à ce que la couche interne 120 et la couche externe 130 comprennent chacune un agent lubrifiant 141 de même nature physico-chimique ou non.

De manière générale, la présente invention consiste en une housse 100 comprenant au moins une couche externe 130 et une couche interne 120 présentant un coefficient de frottement faible l'une relativement à l'autre, soit par la nature même de leurs matériaux respectifs comprenant ou non un ou des agents lubrifiants 141 formant ainsi une interface 140 de réduction de la transmission des contraintes mécaniques, soit par l'ajout d'une couche intermédiaire 142 disposée entre la couche interne 120 et la couche externe 130 de sorte à réduire les contraintes mécaniques, ces contraintes mécaniques concernent les contraintes que la couche externe 130 appliquent sur la couche interne 120 et les contraintes que la couche interne 120 appliquent sur la couche externe 130.

Selon un mode de réalisation, un ou plusieurs capteurs peuvent être disposés sur ou dans la housse 100, de préférence entre la surface externe 123 de la couche interne 120 et la surface interne 132 de la couche externe 130, de sorte à mesurer un ou plusieurs paramètres physiques. De préférence, il peut s'agir pour le moins de capteurs de pression permettant d'évaluer la pression exercée sur la housse, et plus particulièrement entre la couche externe 130 et la couche interne 120.

Par exemple, un capteur de force ou une jauge de déformation peut être disposé dans la housse 100 de sorte à mesurer en temps réel les contraintes mécaniques appliquées par une couche sur une autre et/ou par l'armature 11 sur un vêtement au travers de la housse 100.

De manière avantageuse, la présente housse 100 permet de loger à divers niveaux de celle-ci un ou plusieurs capteurs de divers types.

Ainsi la présente invention permet de réduire les déformations abruptes de surface présentes. La présente invention permet de régulariser la topographie de surface pour qu'elle se rapproche le plus possible d'une morphologie humaine avec peu voire sans irrégularités topographiques. L'utilisation d'une housse selon la présente invention assure une apparence des plus humaines pour la surface du mannequin robotisé, permettant à l'utilisateur de concevoir aisément des vêtements.

La présente invention concerne également un procédé d'installation d'une housse selon la présente invention sur ledit mannequin robotisé.

En particulier la présente invention permet de réduire les contraintes mécaniques supportées par les différents éléments de la chaine de transmission des efforts mécaniques. En effet, cette chaine mécanique, comprenant entre autres un moteur, des éléments de transmission mécaniques, au moins une coque puis une portion de la couche interne et une portion de la couche externe, doit supporter des contraintes très importantes lorsque le coefficient de frottement entre la couche interne et la couche externe n'est pas réduit tel que présenté dans la présente invention.

On notera en particulier qu'en l'absence d'un élément de réduction de la transmission de contraintes mécaniques, le moteur et l'ensemble des pièces de transmission subiraient de fortes contraintes en régime soutenu pour le déplacement d'une coque face au frottement existant entre la couche externe et la couche interne.

L'utilisation astucieuse de cet élément de réduction de la transmission de contraintes mécaniques permet de travailler avec des éléments moteurs de plus faible puissance, des pièces mécaniques plus légères, moins couteuses et des coques en polymère par exemple en carbone dans une matrice organique.

En effet, l'élément de réduction de la transmission des contraintes mécaniques permet de réduire, voire d'éviter, les dommages que peuvent subir les pièces de cette chaine de transmission de contraintes mécaniques.

Selon un mode de réalisation, ce procédé comprenant au moins les étapes suivantes :
- disposition de la couche interne au-dessus de l'armature du mannequin robotisé ;
- disposition de la couche externe au-dessus de la couche interne, la couche externe étant disposée de sorte à appliquer une contrainte mécanique en compression sur une partie de la couche interne.

Cela permet ainsi de mouler au plus près l'armature du mannequin robotisé et ainsi reproduire la morphologie souhaitée tout en réduisant voire en évitant les irrégularités topographiques entre les coques.

L'invention n'est pas limitée aux modes de réalisations précédemment décrits et s'étend à tous les modes de réalisation couverts par les revendications.

### Liste des références

- 10: Mannequin robotisé
- 11: Coques
- 100: Housse
- 110: Empilement de couches
- 111: Epaisseur de l'empilement de couches
- 120: Couche interne
- 121: Epaisseur de la couche interne
- 122: Surface interne de la couche interne
- 123: Surface externe de la couche interne
- 130: Couche externe
- 131: Epaisseur de la couche externe
- 132: Surface interne de la couche externe
- 133: Surface externe de la couche externe
- 140: Interface de réduction de la transmission de contraintes mécaniques
- 141: Agent lubrifiant
- 142: Couche intermédiaire
- 143: Epaisseur de la couche intermédiaire

## Revendications

1. Housse (100) de revêtement, pour mannequin robotisé (10) apte à reproduire à la demande au moins une partie de la morphologie d'un individu par pilotage d'une pluralité de coques (11) mobiles par rapport à une armature du mannequin robotisé (10), la housse (100) étant **caractérisée en ce qu'**elle comprend un empilement de couches (110), ledit empilement de couches (110) comprenant :
- une couche interne (120) à base d'un élastomère ;
- une couche externe (130) comprenant au moins un textile, disposée autour de la couche interne (120), et appliquant au moins une contrainte mécanique sur une partie au moins de la couche interne (120) ;
et dans laquelle la housse (100) comprend au moins un élément (140) de réduction de la transmission des contraintes mécaniques entre la couche interne (120) et la couche externe (130).

2. Housse (100) selon la revendication précédente, dans laquelle l'élément (140) de réduction de la transmission des contraintes mécaniques est en partie au moins formé par une portion comprenant un agent lubrifiant (141), ladite portion étant comprise dans ladite couche interne (120) et/ou ladite couche externe (130).

3. Housse (100) selon la revendication précédente dans laquelle ledit agent lubrifiant (141) est disposé en volume de la couche interne (120) et/ou de la couche externe (130).

4. Housse selon l'une des deux revendications précédentes dans laquelle la couche interne est à base de silicone.

5. Housse selon la revendication précédente, dans laquelle l'agent lubrifiant (141) est un additif au silicone.

6. Housse (100) selon l'une quelconque des revendications précédentes, dans laquelle le ratio entre l'épaisseur (121) de la couche interne (120) et l'épaisseur (131) de la couche externe (130) est compris entre 0.9 et 1.1, les épaisseurs (121, 131) étant prises selon une direction orthogonale à la surface interne (122, 132) de la couche (120, 130) considérée au point de mesure considéré.

7. Housse selon l'une des revendications précédentes, dans laquelle l'épaisseur (121) de la couche interne (120) est comprise entre 3 et 7 mm, et est de préférence égale à 5mm.

8. Housse (10) selon l'une quelconque des revendications précédentes dans laquelle le ratio entre la dimension transversale intérieure de la couche externe (130) au repos et la dimension transversale extérieure de la couche interne (120) est strictement inférieur à 1.

9. Housse selon l'une quelconque des revendications précédentes dans laquelle l'élément (140) de réduction de la transmission des contraintes mécaniques comprend au moins une couche intermédiaire (142) dont la surface interne présente un coefficient de frottement inférieur à celui de la surface externe (123) de la couche interne (120), et de préférence qui comprend au moins un élément lubrifiant pris parmi au moins : du téflon, un vernis, un apprêt.

10. Housse (100) selon l'une quelconque des revendications précédentes dans laquelle la couche interne (120) et la couche externe (130) sont physiquement dissociées.

11. Housse (100) selon l'une quelconque des revendications précédentes dans laquelle le textile comprend des fibres élastomère.

12. Housse (100) selon l'une quelconque des revendications précédentes comprenant au moins un capteur de pression configuré pour mesurer la pression exercée par la couche externe (130) sur la couche interne (120).

13. Procédé d'installation d'une housse (100) selon l'une quelconque des revendications précédentes sur un mannequin robotisé (10) apte à reproduire à la demande la morphologie d'un individu par pilotage d'une pluralité de coques (12) mobiles par rapport à au moins une armature (11), ledit procédé comprenant les étapes suivantes :
- disposition de la couche interne (120) comprenant un élastomère au-dessus de l'armature (11) du mannequin robotisé (10) ;
- disposition de la couche externe (130) comprenant au moins un textile au-dessus de la couche interne (120) et de sorte à appliquer au moins une contrainte mécanique en compression sur une partie au moins de la couche interne (120).

14. Mannequin robotisé (10) apte à reproduire à la demande au moins une partie de la morphologie d'un individu par pilotage d'une pluralité de coques (11) mobiles par rapport à une armature du mannequin robotisé (10), et comprenant une housse (100) de revêtement selon l'une quelconque des revendications 1 à 12 appliquée sur la pluralité de coques, la couche externe (130) appliquant au moins une contrainte mécanique sur la couche interne (120) lorsque la couche interne (120) est disposée entre ladite armature (11) et la couche externe (130).

15. Mannequin robotisé (10) selon la revendication précédente, comprenant des actionneurs configurés pour déplacer les coques de la pluralité de coques, la force de poussée des actionneurs étant d'au moins 150 N, et de préférence de 200 N.

## Patentansprüche

1. Überzugabdeckung (100) für eine robotische Dummy (10), die in der Lage ist, bedarfsmäßig mindestens einen Teil der Morphologie eines Menschen durch Ansteuern einer Vielzahl von beweglichen Schalen (11) nachzubilden, die in Bezug auf einen Rahmen der robotischen Dummy (10) beweglich sind, wobei die Abdeckung (100) **dadurch gekennzeichnet ist, dass** sie einen Stapel aus Schichten (110) umfasst, wobei der Stapel aus Schichten (110) Folgendes umfasst:
- eine innere Schicht (120) auf Elastomerbasis;
- eine äußere Schicht (130), die mindestens ein Textil umfasst, um die innere Schicht (120) herum angeordnet ist und mindestens eine mechanische Spannung auf mindestens einen Teil der inneren Schicht (120) ausübt;
und wobei die Abdeckung (100) mindestens ein Element (140) zur Reduzierung der Übertragung von mechanischen Spannungen zwischen der inneren Schicht (120) und der äußeren Schicht (130) umfasst.

2. Abdeckung (100) nach dem vorhergehenden Anspruch, wobei das Element (140) zur Reduzierung der Übertragung von mechanischen Spannungen mindestens teilweise durch einen Abschnitt gebildet wird, der ein Schmiermittel (141) umfasst, wobei der Abschnitt in der inneren Schicht (120) und/oder der äußeren Schicht (130) enthalten ist.

3. Abdeckung (100) nach dem vorhergehenden Anspruch, wobei das Schmiermittel (141) in Volumen der inneren Schicht (120) und/oder der äußeren Schicht (130) angeordnet ist.

4. Abdeckung nach einem der beiden vorhergehenden Ansprüche, wobei die innere Schicht auf Silikonbasis ist.

5. Abdeckung nach dem vorhergehenden Anspruch, wobei das Schmiermittel (141) ein Silikonzusatz ist.

6. Abdeckung (100) nach einem der vorhergehenden Ansprüche, wobei das Verhältnis zwischen der Dicke (121) der inneren Schicht (120) und der Dicke (131) der äußeren Schicht (130) zwischen 0,9 und 1,1 liegt, wobei die Dicken (121, 131) in einer Richtung orthogonal zur inneren Oberfläche (122, 132) der betrachteten Schicht (120, 130) an dem betrachteten Messpunkt genommen werden.

7. Abdeckung nach einem der vorhergehenden Ansprüche, wobei die Dicke (121) der inneren Schicht (120) zwischen 3 und 7 mm liegt und vorzugsweise gleich 5 mm ist.

8. Abdeckung (100) nach einem der vorhergehenden Ansprüche, wobei das Verhältnis zwischen dem inneren Quermaß der äußeren Schicht (130) im Ruhezustand und dem äußeren Quermaß der inneren Schicht (120) strikt kleiner als 1 ist.

9. Abdeckung nach einem der vorhergehenden Ansprüche, wobei das Element (140) zur Reduzierung der Übertragung von mechanischen Spannungen mindestens eine Zwischenschicht (142) umfasst, deren innere Oberfläche einen geringeren Reibungskoeffizienten aufweist als die äußere Oberfläche (123) der inneren Schicht (120), und die vorzugsweise mindestens ein Schmierelement umfasst, das aus mindestens Folgendem genommen wird: Teflon, einem Lack, einer Grundierung.

10. Abdeckung (100) nach einem der vorhergehenden Ansprüche, wobei die innere Schicht (120) und die äußere Schicht (130) physikalisch getrennt sind.

11. Abdeckung (100) nach einem der vorhergehenden Ansprüche, wobei das Textil Elastomerfasern umfasst.

12. Abdeckung (100) nach einem der vorhergehenden Ansprüche, die mindestens einen Drucksensor umfasst, der so eingerichtet ist, dass er den Druck misst, der von der äußeren Schicht (130) auf die innere Schicht (120) ausgeübt wird.

13. Verfahren zum Installieren einer Abdeckung (100) nach einem der vorhergehenden Ansprüche auf einer robotischen Dummy (10), die in der Lage ist, bedarfsmäßig die Morphologie eines Menschen durch Ansteuern einer Vielzahl von beweglichen Schalen (12) nachzubilden, die in Bezug auf mindestens einen Rahmen (11) beweglich sind, wobei das Verfahren die folgenden Schritte umfasst:
- Anordnen der inneren Schicht (120), die ein Elastomer oberhalb des Rahmens (11) der robotischen Dummy (10) umfasst;
- Anordnen der äußeren Schicht (130), die mindestens ein Textil über der inneren Schicht (120) umfasst und derart ist, dass mindestens eine mechanische Druckspannung auf mindestens einen Teil der inneren Schicht (120) ausgeübt wird.

14. Robotische Dummy (10), die in der Lage ist, bedarfsmäßig mindestens einen Teil der Morphologie eines Menschen durch Ansteuern einer Vielzahl von beweglichen Schalen (11) nachzubilden, die in Bezug auf einen Rahmen der robotergestützten Schneiderpuppe (10) beweglich sind, und eine Überzugabdeckung (100) nach einem der Ansprüche 1 bis 12 umfasst, die auf die Vielzahl von Schalen aufgebracht wird, wobei die äußere Schicht (130) mindestens eine mechanische Spannung auf die innere Schicht (120) ausübt, wenn die innere Schicht (120) zwischen dem Rahmen (11) und der äußeren Schicht (130) angeordnet ist.

15. Robotische Dummy (10) nach dem vorhergehenden Anspruch, die Aktuatoren umfasst, die so eingerichtet sind, dass sie die Schalen der Vielzahl von Schalen bewegen, wobei die Schubkraft der Aktuatoren mindestens 150 N und vorzugsweise 200 N beträgt.

## Claims

1. A coating cover (100) for robotic dummy (10) capable of reproducing at least part of the morphology of an individual on request by controlling a plurality of movable shells (11) relative to a framework of the robotic dummy (10), the cover (100) being **characterised in that** it comprises a stack of layers (110), said stack of layers (110) comprising:
- an elastomer-based inner layer (120);
- an outer layer (130) comprising at least one textile, disposed around the inner layer (120), and applying at least one mechanical stress to at least part of the inner layer (120);
and wherein the cover (100) comprises at least one element (140) for reducing transmission of mechanical stresses between the inner layer (120) and the outer layer (130).

2. The cover (100) according to the preceding claim, wherein the element (140) for reducing transmission of mechanical stresses is at least partly formed by a portion comprising a lubricating agent (141), said portion being comprised in said inner layer (120) and/or said outer layer (130).

3. The cover (100) according to the preceding claim, wherein said lubricating agent (141) is disposed in a volume of the inner layer (120) and/or of the outer layer (130).

4. The cover according to one of the two preceding claims, wherein the inner layer is silicone-based.

5. The cover according to the preceding claim, wherein the lubricating agent (141) is a silicone additive.

6. The cover (100) according to any one of the preceding claims, wherein the ratio of the thickness (121) of the inner layer (120) to the thickness (131) of the outer layer (130) is between 0.9 and 1.1, the thicknesses (121, 131) being considered along a direction orthogonal to the inner surface (122, 132) of the layer (120, 130) considered at the considered measurement point.

7. The cover according to one of the preceding claims, wherein the thickness (121) of the inner layer (120) is between 3 and 7 mm, and is preferably equal to 5 mm.

8. The cover (10) according to any one of the preceding claims wherein the ratio of the internal transverse dimension of the outer layer (130) at rest to the external transverse dimension of the inner layer (120) is strictly less than 1.

9. The cover according to any one of the preceding claims wherein the element (140) for reducing transmission of mechanical stresses comprises at least one intermediate layer (142) the inner surface of which has a friction coefficient lower than that of the outer surface (123) of the inner layer (120), and preferably which comprises at least one lubricating element selected at least from among: Teflon, a varnish, a primer.

10. The cover (100) according to any one of the preceding claims, wherein the inner layer (120) and the outer layer (130) are physically dissociated from each other.

11. The cover (100) according to any one of the preceding claims, wherein the textile comprises elastomer fibres.

12. The cover (100) according to any one of the preceding claims comprising at least one pressure sensor configured to measure the pressure exerted by the outer layer (130) on the inner layer (120).

13. A method for installing a cover (100) according to any one of the preceding claims on a robotic dummy (10) capable of reproducing the morphology of an individual on request by controlling a plurality of movable shells (12) relative to at least one framework (11), said method comprising the following steps of:
- disposing the inner layer (120) comprising an elastomer above the framework (11) of the robotic dummy (10);
- disposing the outer layer (130) comprising at least one textile above the inner layer (120) and so as to apply at least one mechanical compressive stress to at least part of the inner layer (120).

14. A robotic dummy (10) capable of reproducing at least part of the morphology of an individual on request by controlling a plurality of movable shells (11) relative to a framework of the robotic dummy (10), and comprising a coating cover (100) according to any one of claims 1 to 12 applied to the plurality of shells, the outer layer (130) applying at least one mechanical stress to the inner layer (120) when the inner layer (120) is disposed between said framework (11) and the outer layer (130).

15. The robotic dummy (10) according to the preceding claim, comprising actuators configured to move the shells of the plurality of shells, the pushing force of the actuators being at least 150 N, and preferably 200 N.
